# EUROPEAN PATENT SPECIFICATION

(11) **EP 3 316 624 B1**
(45) Date of publication and mention of the grant of the patent: **09.03.2022**
(21) Application number: 16196290.7
(22) Date of filing: 28.10.2016
(51) Int. Cl.: H04W 36/26, H04W 4/18, H04W 28/18, H04L 29/08, H04W 84/12

(54) **METHOD TO ADJUST AT LEAST ONE SESSION PARAMETER AT AN APPLICATION FUNCTION**
VERFAHREN ZUR EINSTELLUNG VON MINDESTENS EINEM SITZUNGSPARAMETER IN EINER APPLIKATION-FUNKTION
PROCÉDÉ D'AJUSTEMENT DES PARAMÈTRES D'AU MOINS UNE SESSION DANS UNE FONCTION D'APPLICATION

(43) Date of publication of application: 02.05.2018
(73) Proprietor: Vodafone GmbH, 40549 Düsseldorf (DE)
(72) Inventor: BINDRIM, Walter, 45721 Haltern am See (DE); BURMESTER, Nick, 60385 Frankfurt am Main (DE); FERNANDES, António Carlos Correia, 40489 Düsseldorf (DE)
(74) Representative: Patentanwälte Bals & Vogel

(56) References cited:
- WO-A1-2011/026409
- US-A1- 2010 150 003
- US-A1- 2011 111 780
- US-A1- 2013 290 494
- US-A1- 2015 312 361
- "3rd Generation Partnership Project; Technical Specification Group Services and System Aspects; Policy and charging control architecture (Release 14)", 3GPP STANDARD; 3GPP TS 23.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 22 June 2016 (2016-06-22), pages 1-245, XP051123381, [retrieved on 2016-06-22]
- J-J P BALBAS ET AL: "Policy and charging control in the evolved packet system", IEEE COMMUNICATIONS MAGAZINE, IEEE SERVICE CENTER, PISCATAWAY, US, vol. 47, no. 2, 1 February 2009 (2009-02-01), pages 68-74, XP011280741, ISSN: 0163-6804, DOI: 10.1109/MCOM.2009.4785382

## Description

### TECHNICAL FIELD

The present invention is related to a method to adjust at least one session parameter.

### BACKGROUND

It is known to offer methods to adjust quality parameters in order to increase or degrade the quality of a service provided by a telecommunication system, in particular by a mobile telecommunication system. The service can, for example, be a voice and/or video over Internet Protocol (IP) service, in particular a Voice over Wi-Fi (VoWiFi) service or Video over Wi-Fi service. It can be provided that the service uses a Wi-Fi (wireless local area network, or WLAN) network as well as a mobile network or a fixed network, for example when a communication connection is established between a user entity of the Wi-Fi network and at least one network entity of a (in particular mobile) telecommunication system. In particular, then the user entity is accessing the communication connection by an access entity. Particularly, after activating a service session, the data for providing the active service session is transferred from the user entity via the access entity to the network entity (and in particular via the network entity to another user entity and/or a user equipment device or a service entity). The network entity is, for example, a network element of a mobile communication network, e. g. of a core network, in particular of a LTE (long-term evolution) network.

It is a disadvantage of commonly known methods that events of a change of a transmission capability of the communication connection cannot be sufficiently handled.

For example, in case of an event, in particular when a handover and/or (backhauling) bearer change occurs, the bandwidth of the communication connection can degrade and may not be sufficient to fulfill the service requirement of the active service session. For example, during a VoWiFi call, the user entity triggers a handover from Wi-Fi to another domain or bearer (for example a mobile network like 4G, 3G, 2G or another Wi-Fi access). This can cause packet loss, jitters or the use of inefficient service session parameters, like a non-optimal codec or resolution for the service.

Another example is a Wi-Fi hotspot, in particular of a vehicle, wherein the mobile network offers the backhauling. In this case, the VoWiFi service of the Wi-Fi hotspot does not have any information about the backhaul quality and the corresponding capabilities. As a result, a session parameter may be used that is not optimal for the given transmission capability. A further example is a VoWiFi session that has been established in a moment where the available bandwidth was low, and at a later moment the bandwidth is higher again, then the service quality is still reduced, which means again that the session parameter is not optimal. Documents US 2013/0290494 A1 and US 2011/0111780 A1 provide methods for reacting on network changes.

### SUMMARY

The invention is defined by the appended claim 1; further embodiments are defined in the appended dependent claims.

It is an object of the present invention to overcome aforesaid problems at least partially. In particular, it is an object of the present invention to provide an easy and cost-efficient solution to provide an optimal service quality of an active service session. Particularly, it is an object to manage quality-relevant IP service criteria, for instance bandwidth, codec, jitter, or the like, in particular for real time or near real time services (e.g. voice and/or video services, video streaming, etc.) in case of a bearer change, a bearer degradation or a bearer enhancement or the like.

It is an aspect of the present disclosure to provide a method to adjust at least one session parameter, particularly a codec and/or a streaming quality and/or a video quality and/or the like, of an active service session, wherein said active service session is executed using a communication connection. In other words, the service is provided by transferring data (or data packets) over said communication connection. The communication connection can be established between a user entity and at least one network entity of a telecommunication system, in particular a mobile telecommunication system. The at least one session parameter of the active service session is correlated with at least one service requirement. It may be provided that the at least one session parameter, which can for example define or influence the quality of the service and/or the service requirements, is first selected when the communication connection is established and/or the service session is activated. It can be possible that the active service session is active until the service is (completely) terminated, for instance by the user entity, in particular when a voice call is terminated.

Transmission capabilities of the communication connection can change during the active service session, for example when an event like a handover or bearer change occurs. This can, for example, lead to a usage of non-optimal session parameters, for example a bandwidth of the communication connection may not be sufficient to fulfill the service requirements. It can therefore be provided that the inventive method comprises at least the following steps, which can be performed sequentially or in any order, wherein single steps can also be repeated:
- Determining at least one connection information, wherein the connection information is specific for a transmission capability of the communication connection,
- Comparing the at least one connection information with the at least one service requirement of the active service session,
- Adjusting the at least one session parameter of the active service session based on the result of the comparison, in particular so that the service requirement and/or a quality profile is adapted and/or reduced and/or increased.

The step of adjusting the session parameter is to be understood such that a change of parameters is only carried out if required. Of course the adjusting step can also keep a parameter which already fits to the respective technical needs in a specific situation. It is further possible that the step of adjustment also considers an adaptation/selection of the infrastructure used (e.g. Backhauling).

In addition to already known methods, the session parameter of the active service session can be adjusted considering the transmission capability of the communication connection and/or a corresponding event, in particular a change of the transmission capability, preferably during the active service session (that means without terminating and/or pausing the active service session). This allows to guarantee optimal service quality for the active service session in a cost-efficient way.

The event of a change of the transmission capability of the communication connection (affecting the active service session) can, in particular, occur in the following situations:
- a handover, in particular a VoWiFi handover, wherein the handover can occur from Wi-Fi into other domains or bearers (like e-UTRAN, UTRAN, GERAN),
- a bearer change, for example notified by a core network entity and/or a PCEF (Policy and Charging Enforcement Function) and/or TDF (Traffic Detection Function) network entity or the user entity,
- a bandwidth change, for example notified and/or measured by the user entity, in particular by a user application located in the user entity,
- a backhauling bearer change in case of backhauling, in particular mobile backhauling or DSL-backhauling or the like.

In this context, UTRAN refers to "UMTS Terrestrial Radio Access Network", e-UTRAN refers to "evolved UMTS Terrestrial Radio Access Network" and GERAN refers to "GSM EDGE Radio Access Network". A measurement and/or reporting of the event can, for example, be started in regular intervals or on a bearer change event. In particular, the user entity and/or the user application performs the measurement of the event, for instance by measuring actual bearer capabilities, in particular bandwidth, jitter, latency or the like. The reporting can particularly be carried out by reporting the event to a database network function.

The core network can, for example, be the core of the (mobile) telecommunication system and therefore offers communication possibilities to other mobile entities, other access entities or to the internet. An access entity can, for example, be a Wi-Fi hotspot, in particular of a (motor) vehicle. In particular, the user entity and/or the mobile entity and/or the user equipment device can be a user equipment, which is used directly by an end-user to communicate, for example a hand-held telephone, laptop computer or the like. In particular, the user equipment comprises mobility tasks functionality, such as mobility management, call control, session control or the like, towards the core network. Furthermore, the user entity can, in particular, be a user device different from a user equipment so that, for example, the user entity only comprises a Wi-Fi communication interface without providing a mobile network interface or mobility tasks functionality.

It is also of advantage that according to the present invention, the service is a multimedia service, in particular over an IP network (or a network comprising an IP based network architecture, such as the system architecture evolution of LTE). The (mobile) telecommunication system is for example configured as a LTE (long-term evolution) system. Furthermore, the network entity can at least partially comprise an element of the mobile, in particular core, network, for example the PCRF (Policy and charging rules function). The user entity is, for example, a user equipment or another electronic device that comprises a network interface, in particular a Wi-Fi interface. This is a very easy and cost-efficient way to carry out an inventive method.

In particular, the following further steps are provided before comparing and after determining the at least one connection information:
- Sending the at least one determined connection information, in particular by a first entity, preferably by the user entity,
- Receiving the sent connection information, in particular by a second entity, preferably by the network entity.

This allows for an easy way of transmitting the connection information, for example a transmission capability change event.

It is one possibility that the user entity is configured to access the communication connection via Wi-Fi, wherein in particular a packet switched mobile network is used for the communication connection. Therefore, the communication connection can allow for a transmission of data (or data packets) between the user entity and the network entity via an access entity and in particular also a backhauling bearer. The access entity and/or backhauling bearer can transmit data to the (mobile) network and/or receive data from the (mobile) network. This provides a flexible way of providing a service for (mobile) communications.

It is conceivable that the step of adjusting the at least one session parameter is carried out when a handover from a Wi-Fi network to another network (which could be a mobile network), or vice versa, occurs, wherein in particular the (service) session parameter is modified depending on a change of the transmission capability (transmission capability change event) caused for example by the handover. Alternatively, or additionally, the step of determining the at least one connection information is carried out as a result of the event, in particular the handover from the Wi-Fi network to the other network or vice versa. In particular, the Wi-Fi network is a Wi-Fi at home network and/or the other network is a 2G or 3G or 4G mobile network. Of course, the connection information may also be determined as a result of, for example, a handover between two different (mobile) networks, a backhauling bearer change, which also effects a change of the transmission capability, a congestion indication under heavy loaded conditions, etc.

A further advantage could be that according to the present invention the step of adjusting the at least one session parameter is selected out of at least one of the following options:
- Adjusting a codec used by the active service session, in particular a video and/or audio codec,
- Adjusting a streaming quality used by the active service session, in particular a video and/or audio quality,
- Adjusting a resolution used by the active service session, in particular a video and/or audio resolution,
- Adjusting IP service criteria, like a codec, a resolution, a used bandwidth, a compression, an encryption, or the like, especially for a multimedia service like voice and/or video or the like,
- Adjusting any other relevant parameter/mechanism/network change which is relevant for the specific use case.

This allows for a fast and easy way of adjusting the quality of the service, and particularly likewise adjusting the service requirements.

It is one possibility that the at least one session parameter comprises or is dependent on a quality profile that specifies the quality and/or affects the service requirement of the active service session. For example, the step of comparing the at least one connection information comprises a comparison of at least one connection value, which is in particular specific for a current or missing bandwidth and/or for a bearer provided by the communication connection for the active service session, with at least one requirement value, which is specific for a minimum connection value that is necessary so as to fulfill the service requirement according to the current session parameter and/or the quality profile of the active service session. This guarantees that an optimal session parameter can be determined.

It can be provided that a (the) connection value of the connection information is compared to a (the) requirement value correlated with the service requirement, and that the step of adjusting the at least one session parameter comprises a decision, wherein:
- the at least one service parameter, in particular a quality profile, for the active service session is adapted so that the service requirement and/or the quality of the active service session is increased, if the connection value exceeds the requirement value,
- the at least one service parameter, in particular the quality profile, for the active service session is adapted so that the service requirement and/or the quality of the active service session is degraded, if the connection value is equal to or below the requirement value.

The comparison and/or the decision can, for example, be performed by the network entity or another network entity or the user entity. Therefore, an easy and fast adjusting can be performed. Furthermore, it can be possible that the decision is based on a local policy and/or on a bearer information and/or on a bandwidth information, for instance a missing bandwidth and/or a current bandwidth. The bandwidth information can, for example, be measured and/or reported by the user entity (in particular by an application) and/or by a function located in the BSC (Base station controller) or the RNC (Radio Network Controller) or the eNodeB (evolved Node B). Alternatively, or additionally, the decision can be based on a database information that the application function reads out from a database when an event (transmission capability change event), for instance a bearer change, is reported. Further, the decision can be based on an expected bearer capability, for example an expected session parameter that should be supported by the new bearer in case of a bearer change.

Furthermore, it is possible that the step of adjusting of the session parameter is performed under consideration of a network information, in particular a bandwidth information, preferably a missing bandwidth for fulfilling the service requirement. In particular, the connection information comprises said network information. The network information can, for example, be determined by measurements, in particular performed by the user entity. The measurement and/or the report of the network information can be triggered, for example by the user entity or the application function network entity or another network entity.

The application/function can, particularly, be configured to be downloadable and/or installable to the user entity (pre-installation or integration in the user entity is also possible) and/or able to notify (directly) the application function network entity of the network, preferably via the service and/or application layer. Additionally, the user application can be able to propose a specific service parameter and/or a quality profile that fulfills the new transmission capability in case of a change event of the transmission capability. The user application can be able to inform the application function network entity about the event by sending out a trigger signal or the connection information, and in particular before the user application sends out the trigger signal or the connection information, the user application can request a report of the network capabilities in order to generate the network information.

Furthermore, it can be possible that the user entity and/or a user application is configured to be identifiable by a backhauling instance, in particular mobile backhauling instance. For example, the user entity registers at the Wi-Fi access point and/or hotspot by using an authentication procedure like TLS (transport layer security). Afterwards, the user entity can receive reports about an event, like a bearer change, that changes the transmission capability from the backhauling instance, in particular mobile backhauling instance. This allows for a notification and considering of such events in order to guarantee optimal quality settings.

In particular, the step of determining at least one connection information can at least partially be carried out by a (in particular mobile) backhauling instance or application and/or a WiFi access point. In other words, the backhauling instance can be able to report bearer changes or bandwidth changes or other changes of the communication connection, and in particular report these changes to the network entity or to the user entity. This overcomes the problem that when using backhauling the user entity or the network entity cannot see any bearer changes of the backhauling technology.

Provision can be made for the connection information to comprise at least one of the following information, in particular about a transmission capability change event:
- an information about a bearer change of the communication connection, in particular a bearer degradation or enhancement,
- an information about a bandwidth change of the communication connection, in particular when a handover of the communication connection occurs,
- an information about a handover of the communication connection,
- an information about a backhauling bearer change (e.g.: from 3G to 2G) and/or a bandwidth change in backhauling (more or less load), in particular for a Wi-Fi hotspot, in particular a vehicle Wi-Fi hotspot, where the hotspot is not connected via a stable connection like mobile backhaul,
- an information on any other relevant parameter/mechanism/network change which is relevant for the specific use case

Of course, the connection information can also comprise further and/or different information about other events or effects that cause a change of the transmission capability.

Furthermore, it is conceivable that the step of adjusting the at least one session parameter is carried out at least partially by an application function network entity (AF). The AF, in particular as a network element of the IMS (IP multimedia subsystem), for example a P-CSCF (Proxy Call Session Control Function), can effect an adjustment of the service parameter, in particular of a quality profile, for the active service session based on a policy information and/or based on the connection information. In particular, the AF requests a degradation or increase of the quality profile to the user entity in order to cause the adjustment. In particular, the adjustment is applied during the active service session without terminating the active service session, so as to guarantee a stable service provision.

Optionally, the step of determining the at least one connection information is selected out of at least one of the following options, which particularly can be executed sequentially or in any order:
- notifying an event, in particular a bearer change or bandwidth change or the like, for example by the user entity and/or the network entity, for example a PCRF network entity via a policy interface, using for example a Gx interface, wherein particularly the event is specific for a change of the transmission capability,
- communicating (reporting) the event as (or using) the connection information, in particular to a network entity, for example to an application function network entity (for example the AF), preferably via an application interface, in particular a Rx interface. The PCRF network entity is for example a network element of the core network. This provides an efficient network driven function for providing a quality adjustment during an active service session.

The application interface is, for example, configured as an interface between the PCRF and the AF. The AF is in particular configured as an application server for providing different multimedia services. The policy interface is particularly configured as an interface between the PCRF and the PCEF (Policy and Charging Enforcement Function). Advantageously, the Gx interface refers to a Gx reference point that is used for provisioning and removal of Policy and Charging Control (PCC) rules from the PCRF to the PCEF and the transmission of traffic plane events from the PCEF to the PCRF. The Gx reference point can be used for charging control, policy control or both.

According to the present and inventive method, it can be provided that during or after the step of determining the at least one connection information the connection information (or connection parameter), for example a currently available bandwidth of the communication connection, is reported by a network function towards an application function network entity. In particular, the network function is located at the BSC or RNC or eNodeB or any other access relevant network entity function (e.g. DSL, fibre, cable). This allows for an efficient way of reporting the connection information.

It can be possible that the step of determining the at least one connection information is selected out of at least one of the following options, which can be executed sequentially or in any order:
- notifying an event, in particular a bearer change, as a connection information by the user entity, in particular by a user application (app) located on the user entity, measuring the transmission capability, in particular a network capability, of the communication connection, in particular by the user entity,
- communicating the connection information, in particular a bandwidth information and/or the bearer change, by the user entity towards an application function network entity via a service and/or application layer, wherein in particular the user entity adapts the communication towards the application function network entity depending on the measurement
- make use of any other relevant parameters, mechanism, or network information which is necessary to allow the information flow between the necessary entities.

In particular, the step of comparing the at least one connection information and/or the step of adjusting the at least one session parameter is carried out at least partially by the user entity, in particular so as to propose a quality profile adaption and/or service requirement change. Furthermore, it can be possible that the user entity can access the communication connection for example via a Wi-Fi access point and/or using backhauling, in particular mobile backhauling, and in particular the network entity reports the connection information towards the Wi-Fi access point and/or towards the user entity. Therefore, a reliable and easy backhauling driven function for adjusting the session parameter is provided.

For example, the service session can be able to provide a multimedia service over Wi-Fi, in particular a VoWiFi voice service. Particularly, Wi-Fi is used by the user entity to access the voice services of the telecommunication network, in particular the mobile telecommunication network.. In particular, the application function network entity comprises or communicated via an P-CSCF, which can be adapted in order to provide an adjustment of the session parameter, in particular based on connection informations which are provided by an network entity or the user entity.

In particular, it might also be that the scenario described above is extended beyond the reach of the mobile network. For example, the user might be using services provided by over-the-top content/service providers which also would require/utilize the information.

A further aspect of the present disclosure, which is not part of the present invention, is a computer program product being stored on a computer readable medium adjusting at least one session parameter of an active service session that is executed using a communication connection between a user entity and at least one network entity of a (mobile) telecommunication system, wherein the session parameter of the active service session is correlated with at least one service requirement, comprising the following:
- Computer readable program means, initiating the computer to determine at least one connection information, wherein the connection information is specific for a transmission capability of the communication connection,
- Computer readable program means, initiating the computer to compare the at least one connection information with the at least one service requirement of the active service session,
- Computer readable program means, initiating the computer to adjust the at least one session parameter of the active service session based on the result of the comparison.

In particular, an inventive computer program product can be used to carry out an inventive method. By using the inventive method, the computer program product comes up with the same advantages which have been discussed in detail with respect to the inventive method.

### BRIEF DESCRIPTION OF THE DRAWINGS

The present invention is discussed in more detail with respect to the accompanying drawings which show schematically:
FIG. 1 a communication connection between a user entity and a network entity;
FIG. 2 a possibility for connections of different network entities;
FIG. 3 a further possibility for connections of different network entities;

### DETAILED DESCRIPTION

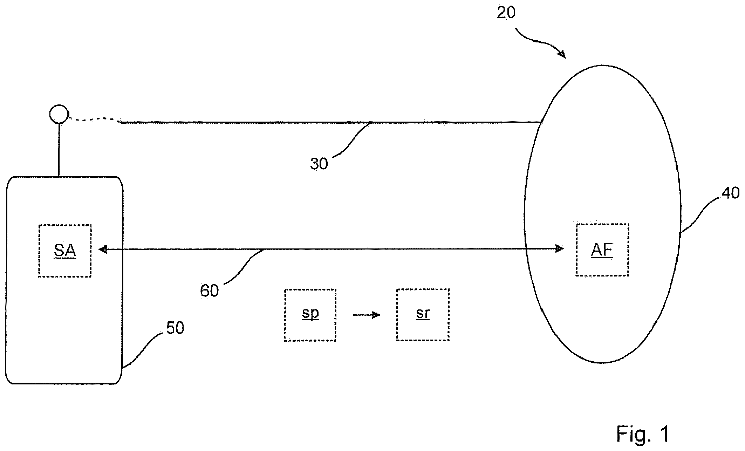

FIG. 1 shows a typical situation for the inventive method. A user entity 50, for example a mobile entity like a mobile phone or a stationary entity like a computer, is in connection to at least one network entity 40. By way of example, the network entity 40 can be a core entity 20 of a (in particular mobile) telecommunication system. Furthermore, the network entity 40 can also include an application function network entity (AF) of the telecommunication system.

As shown in FIG. 1, an active service session se is executed using a communication connection 30 between the user entity 50 and the at least one network entity 40. During the active service session se establishment, session parameters sp are collected based on the information from communication connection 30 and the active service session se.

In particular, the session parameter sp is defined and selected to fulfill at least one service requirement sr which can be related to fulfill quality of experience for the given communication connection 30 and the associated active service session se.

Based on that the communication connection 30 can change during the active service session se, the selected service parameter maybe not fit anymore the needs of the service requirements sr to deliver the quality of experience.

Therefore the session parameter sp is the point which allows an adaption, to allow to keep the service requirements sr without changing the active service session se.

In particular, on changes of communication connection 30, the user entity 50 or the network entity 40 can detect these changes and start based on this a modification of the session parameters sp via exchanging the changes on application layer 60 between the service application SA and application function AF.

Furthermore, it is possible that at least one new function is provided that can detect these changes (for example that is aware and able to report the current bandwidth available on the access/transport layer). Possible locations (but not limited) for this function are BSC, RNC, eNodeB or further capabilities under Mobile Edge Computing.

Furthermore, it is receivable that the application function AF requests based on the changes (in particular the report), particularly from the new function, a degradation or increase of a quality profile for the current session, in particular via the service/application layer.

In particular, a (mobile) backhauling instance or application and/or a WiFi access point is able to report bearer changes or bandwidth changes or other changes of communication connection 30, and in particular report these changes to the network entity 40 or to the user entity 50. This overcomes the problem that when using backhauling the user entity 50 or the network entity 40 cannot see any bearer changes of the backhauling technology.

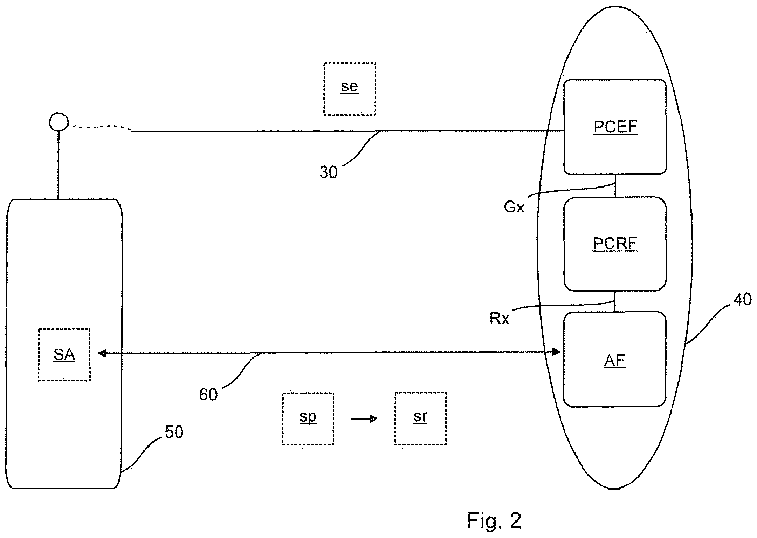

According to FIG. 2, the application function network entity (AF) may be used for the adjustment of the at least one session parameter sp. For example, in case there is an event that changes a transmission capability, like a backhauling (in particular mobile backhauling) bearer change or a bearer change or a bandwidth change (on the communication connection 30), this can be notified from a network entity 40. In particular, the PCEF network entity (which can know the information or status from the communication connection 30) reports the event to the PCRF network entity via a policy interface Gx. Then, the PCRF network entity can communicate the event to the application function network entity AF via an application interface Rx. After receiving information about the event, the application function network entity AF can request a reduction or increase of the service parameters sp and/or of a quality profile which is related to the service requirements sr. By adjustment of the service parameters, the service requirements can be kept or can be increased or decreased. This aims to keep or increase the service requirements sr to keep, for example, the quality of experience.

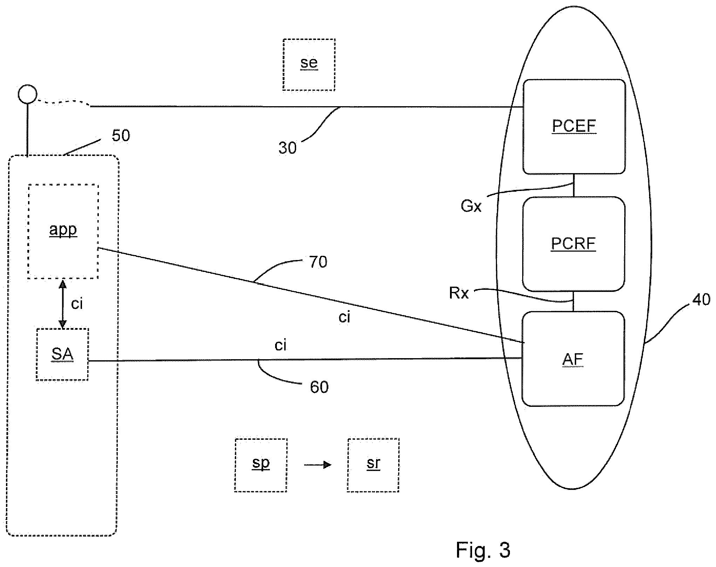

In FIG. 3, another situation is shown where the (user) entity 50 itself, or an application "app" located in the (user) entity 50, notifies the service application function directly or the application function AF of the network entity AF about the event via a signaling path 60. The signaling path 60, for example, refers to the service and/or application layer. By way of example, the (user) entity 50 or the application app can perform measurements in order to determine the connection information ci, like an information about a bandwidth. Afterwards, the service application sa or the application app can send the connection information ci to the application function AF in the network entity 40 using a dedicated reference point, as illustrated by a communication path 70 or by handover the connection information to the service application SA, which will transmit this information to the application function AF via the application layer 60. The application function AF can then use the connection information ci to proof an adaptation of the service parameters sp to keep the service requirements sr. If there is an adaptation of the service parameters sp, the application function AF will inform the service application SA about the adaptations via the application layer 60.

There would be also the way that the service application SA on the user entity 50 will directly make use of the connection information ci to start an adaptation of the service parameter sp and inform the application function AF about this change via the application layer 60,

Of course, aforesaid description of the accompanying drawings is only by the way of detail and example. Specific features of each aspect of the present invention and the figures can be combined with each other if of technical sense.

### REFERENCE SIGNS

- 20: core entity

- 30: communication connection

- 40: network entity

- 50: entity, user entity, mobile entity

- 60: signaling path
- 70: communication path

- app: user application
- se: service session
- sp: session parameter
- sr: service requirement
- AF: application function network entity
- SA: service application
- PCEF: PCEF Network entity
- Gx: policy interface
- Rx: application interface
- PCRF: PCRF network entity
- ci: connection information

## Claims

1. Method to adjust at least one session parameter (sp) of an active multi media service session (se) that is executed by a communication connection (30) between a user entity (50) and at least one network entity (40) of a telecommunication system, wherein the user entity (50) comprises a service application (SA) or a service application (SA) and a user application (app), wherein the network entity (40) comprises an application function network entity (AF), wherein the session parameter (sp) of the active service session (se) is correlated with at least one service requirement (sr), **comprising the following steps:**
- Determining at least one connection information (ci), wherein the connection information (ci) is specific for a transmission capability of the communication connection (30),
- Sending the connection information (ci) directly to the application function network entity (AF) by the service application (SA) via a signaling path (60) or by the user application (app) via a communication path (70),
- Comparing, by the application function network entity (AF), the at least one connection information (ci) with the at least one service requirement (sr) of the active service session (se),
- Adjusting the at least one session parameter (sp) of the active service session (se) based on the result of the comparison,
wherein the connection information (ci) comprises at least one of the following information:
- an information about a bearer change of the communication connection (30),
- an information about a bandwidth change of the communication connection (30) ,
- an information about a handover of the communication connection (30), an information about a backhauling bearer change and/or a bandwidth change in backhauling,
wherein the step of adjusting the at least one session parameter (sp) is carried out at least partially by the application function network entity (AF), wherein the application function network entity (AF) effects the adjusting of the at least one session parameter (sp) for the active service session (se) based on a policy information and/or based on the connection information (ci), and
the comparison is performed by the network entity (40) or the user entity (50).

2. Method according to claim 1, **characterized in that** the user entity (50) is configured to access the communication connection (30) via Wi-Fi.

3. Method according to any of the preceding claims, **characterized in that** the step of adjusting the at least one session parameter (sp) is carried out when a handover from a Wi-Fi network to another network, or vice versa, occurs.

4. Method according to any of the preceding claims, **characterized in that** the step of adjusting the at least one session parameter (sp) is selected out of at least one of the following options:
- Adjusting a codec used by the active service session (se),
- Adjusting a streaming quality used by the active service session (se),
- Adjusting a resolution used by the active service session (se),
- Adjusting IP service criteria, in particular a codec, a resolution, a used bandwidth, a compression, an encryption, or the like, especially for a multimedia service.

5. Method according to any of the preceding claims, **characterized in that** a connection value of the connection information (ci) is compared to a requirement value correlated with the service requirement (sr), and the step of adjusting the at least one session parameter (sp) comprises a decision, wherein:
- the session parameter (sp) for the active service session (se) is adapted so that the service requirement (sr) is increased, if the connection value exceeds the requirement value,
- the session parameter (sp) for the active service session (se) is adapted so that the service requirement (sr) is reduced, if the connection value is equal to or below the requirement value.

6. Method according to any of the preceding claims, **characterized in that** the connection information (ci) further comprises an information on any other relevant parameter or mechanism or network change which is relevant for the specific use case.

7. Method according to any of the preceding claims, **characterized in that** the step of determining the at least one connection information (ci) is selected out of at least one of the following options:
- notifying an event by a policy and charging rule function network entity (PCRF) via a policy interface (Gx),
- communicating the event as the connection information (ci) to an application function network entity (AF) via an application interface (Rx).

8. Method according to any of the preceding claims, **characterized in that** during the step of determining the at least one connection information (ci) a currently available bandwidth of the communication connection (30) is reported towards the application function network entity (AF).

9. Method according to any of the preceding claims, **characterized in that** the step of determining the at least one connection information (ci) is selected out of at least one of the following options:
- notifying an event by the user entity (50),
- measuring the transmission capability of the communication connection (30) by the user entity (50) and/or the application (app),
- communicating the connection information (ci) by the user entity (50) towards an application function network entity (AF) via a service and/or application layer.

10. Method according to any of the preceding claims, **characterized in that** the user entity (50) access the communication connection (30) via a Wi-Fi access point using backhauling, and the network entity (40) reports the connection information (ci) towards the Wi-Fi access point and/or towards the user entity (50).

11. Method according to any of the preceding claims, **characterized in that** the service session (se) provides a multimedia service over Wi-Fi.

## Patentansprüche

1. Verfahren zur Anpassung mindestens eines Sitzungsparameters (sp) einer aktiven Multimedia-Dienstsitzung (se), die von einer Kommunikationsverbindung (30) zwischen einer Benutzereinheit (50) und mindestens einer Netzeinheit (40) eines Telekommunikationssystems ausgeführt wird, wobei die Benutzereinheit (50) eine Dienstanwendung (SA) oder eine Dienstanwendung (SA) und eine Benutzeranwendung (app) umfasst, wobei die Netzeinheit (40) eine Anwendungsfunktionsnetzeinheit (AF) umfasst, wobei der Sitzungsparameter (sp) der aktiven Dienstsitzung (se) mit mindestens einer Dienstanforderung (sr) korreliert ist, **umfassend die folgenden Schritte:**
- Ermittlung mindestens einer Verbindungsinformation (ci), wobei die Verbindungsinformation (ci) spezifisch für eine Übertragungsfähigkeit der Kommunikationsverbindung (30) ist,
- Senden der Verbindungsinformation (ci) direkt an die Anwendungsfunktionsnetzeinheit (AF) durch die Dienstanwendung (SA) über einen Signalpfad (60) oder durch die Benutzeranwendung (app) über einen Kommunikationspfad (70),
- Vergleich der mindestens einen Verbindungsinformation (ci) mit der mindestens einen Dienstanforderung (sr) der aktiven Dienstsitzung (se) durch die Anwendungsfunktionsnetzeinheit (AF),
- Anpassung des mindestens einen Sitzungsparameters (sp) der aktiven Dienstsitzung (se) basierend auf dem Ergebnis des Vergleichs,
wobei die Verbindungsinformation (ci) mindestens eine der folgenden Informationen umfasst:
- eine Information über einen Trägerwechsel der Kommunikationsverbindung (30),
- eine Information über eine Bandbreitenänderung der Kommunikationsverbindung (30),
- eine Information über einen Handover der Kommunikationsverbindung (30), eine Information über einen Backhauling-Trägerwechsel und/oder eine Bandbreitenänderung im Backhauling,
wobei der Schritt der Anpassung des mindestens einen Sitzungsparameters (sp) zumindest teilweise von der Anwendungsfunktionsnetzeinheit (AF) durchgeführt wird, wobei die Anwendungsfunktionsnetzeinheit (AF) die Anpassung des mindestens einen Sitzungsparameters (sp) für die aktive Dienstsitzung (se) auf der Grundlage einer Richtlinieninformation und/oder auf der Grundlage der Verbindungsinformation (ci) bewirkt und
der Vergleich von der Netzeinheit (40) oder der Benutzereinheit (50) durchgeführt wird.

2. Verfahren nach Anspruch 1, **dadurch gekennzeichnet, dass** die Benutzereinheit (50) so konfiguriert ist, dass sie über Wi-Fi auf die Kommunikationsverbindung (30) zugreift.

3. Verfahren nach einem der vorhergehenden Ansprüche, **dadurch gekennzeichnet, dass** der Schritt der Anpassung des mindestens einen Sitzungsparameters (sp) durchgeführt wird, wenn ein Handover von einem Wi-Fi-Netz zu einem anderen Netz oder umgekehrt stattfindet.

4. Verfahren nach einem der vorhergehenden Ansprüche, **dadurch gekennzeichnet, dass** der Schritt der Anpassung des mindestens einen Sitzungsparameters (sp) aus mindestens einer der folgenden Optionen ausgewählt wird:
- Anpassung eines von der aktiven Dienstsitzung verwendeten Codecs (se),
- Anpassung der von der aktiven Dienstsitzung verwendeten Streaming-Qualität (se),
- Anpassung einer von der aktiven Dienstsitzung verwendeten Auflösung (se),
- Anpassung von IP-Dienstkriterien, insbesondere eines Codecs, einer Auflösung, einer genutzten Bandbreite, einer Kompression, einer Verschlüsselung oder ähnlichem, insbesondere für einen Multimediadienst.

5. Verfahren nach einem der vorhergehenden Ansprüche, **dadurch gekennzeichnet, dass** ein Verbindungswert der Verbindungsinformation (ci) mit einem mit der Dienstanforderung (sr) korrelierten Anforderungswert verglichen wird, und der Schritt der Anpassung des mindestens einen Sitzungsparameters (sp) eine Entscheidung umfasst, wobei:
- der Sitzungsparameter (sp) für die aktive Dienstsitzung (se) so angepasst wird, dass die Dienstanforderung (sr) erhöht wird, wenn der Verbindungswert den Anforderungswert überschreitet,
- der Sitzungsparameter (sp) für die aktive Dienstsitzung (se) so angepasst wird, dass die Dienstanforderung (sr) reduziert wird, wenn der Verbindungswert gleich oder kleiner als der Anforderungswert ist.

6. Verfahren nach einem der vorangehenden Ansprüche, **dadurch gekennzeichnet, dass** die Verbindungsinformation (ci) ferner eine Information über irgendeinen anderen relevanten Parameter oder Mechanismus oder eine Netzänderung umfasst, die für den spezifischen Anwendungsfall relevant ist.

7. Verfahren nach einem der vorhergehenden Ansprüche, **dadurch gekennzeichnet, dass** der Schritt der Ermittlung der mindestens einen Verbindungsinformation (ci) aus mindestens einer der folgenden Optionen ausgewählt wird:
- Benachrichtigung über ein Ereignis durch eine Netzeinheit mit Policy- und Gebührenregelfunktion (PCRF) über eine Policy-Schnittstelle (Gx),
- Übermittlung des Ereignisses als Verbindungsinformation (ci) an eine Anwendungsfunktionsnetzeinheit (AF) über eine Anwendungsschnittstelle (Rx).

8. Verfahren nach einem der vorhergehenden Ansprüche, **dadurch gekennzeichnet, dass** während des Schritts der Ermittlung der mindestens einen Verbindungsinformation (ci) eine aktuell verfügbare Bandbreite der Kommunikationsverbindung (30) an die Anwendungsfunktionsnetzeinheit (AF) gemeldet wird.

9. Verfahren nach einem der vorhergehenden Ansprüche, **dadurch gekennzeichnet, dass** der Schritt der Ermittlung der mindestens einen Verbindungsinformation (ci) aus mindestens einer der folgenden Optionen ausgewählt wird:
- Benachrichtigung über ein Ereignis durch die Benutzereinheit (50),
- Messung der Übertragungsfähigkeit der Kommunikationsverbindung (30) durch die Benutzereinheit (50) und/oder die Anwendung (app),
- Übermittlung der Verbindungsinformation (ci) durch die Benutzereinheit (50) an eine Anwendungsfunktionsnetzeinheit (AF) über eine Dienst- und/oder Anwendungsschicht.

10. Verfahren nach einem der vorhergehenden Ansprüche, **dadurch gekennzeichnet, dass** die Benutzereinheit (50) über einen Wi-Fi-Zugangspunkt unter Verwendung von Backhauling auf die Kommunikationsverbindung (30) zugreift und die Netzeinheit (40) die Verbindungsinformation (ci) an den Wi-Fi-Zugangspunkt und/oder an die Benutzereinheit (50) meldet.

11. Verfahren nach einem der vorhergehenden Ansprüche, **dadurch gekennzeichnet, dass** die Dienstsitzung (se) einen Multimediadienst über Wi-Fi bereitstellt.

## Revendications

1. Procédé pour l'ajustement d'au moins un paramètre de session (sp) d'une session de service multimédia active (se) qui est exécutée par une connexion de communication (30) entre une entité utilisateur (50) et au moins une entité réseau (40) d'un système de télécommunication, dans lequel l'entité utilisateur (50) comprend une application de service (SA) ou une application de service (SA) et une application utilisateur (app), dans lequel l'entité réseau (40) comprend une entité réseau de fonction d'application (AF), dans lequel le paramètre de session (sp) de la session de service active (se) est corrélé avec au moins une exigence de service (sr), **comprenant les étapes suivantes :**
- Déterminer au moins une information de connexion (ci), dans laquelle l'information de connexion (ci) est spécifique à une capacité de transmission de la connexion de communication (30),
- Envoyer les informations de connexion (ci) directement à l'entité réseau de fonctions d'application (AF) par l'application de service (SA) via un chemin de signalisation (60) ou par l'application utilisateur (app) via un chemin de communication (70),
- Comparer, par l'entité réseau de fonction d'application (AF), l'au moins une information de connexion (ci) avec l'au moins une exigence de service (sr) de la session de service active (se),
- Ajustement de l'au moins un paramètre de session (sp) de la session de service active (se) sur la base du résultat de la comparaison,
dans lequel les informations de connexion (ci) comprennent au moins l'une des informations suivantes :
- une information sur un changement de support de la connexion de communication (30),
- une information sur un changement de bande passante de la connexion de communication (30) ,
- une information sur un transfert de la connexion de communication (30), une information sur un changement de support de backhauling et/ou un changement de bande passante dans le backhauling,
dans lequel l'étape d'ajustement de l'au moins un paramètre de session (sp) est exécutée au moins partiellement par l'entité réseau de fonction d'application (AF), dans lequel l'entité réseau de fonction d'application (AF) effectue l'ajustement de l'au moins un paramètre de session (sp) pour la session de service active (se) sur la base d'une information de politique et/ou sur la base de l'information de connexion (ci) et la comparaison est effectuée par l'entité réseau (40) ou l'entité utilisateur (50).

2. Procédé selon la revendication 1, **caractérisé en ce que** l'entité utilisateur (50) est configurée pour accéder à la connexion de communication (30) via Wi-Fi.

3. Procédé selon l'une quelconque des revendications précédentes, **caractérisé en ce que** l'étape d'ajustement de l'au moins un paramètre de session (sp) est réalisée lorsqu'un transfert d'un réseau Wi-Fi vers un autre réseau, ou vice versa, se produit.

4. Procédé selon l'une quelconque des revendications précédentes, **caractérisé en ce que** l'étape d'ajustement de l'au moins un paramètre de session (sp) est sélectionnée parmi au moins l'une des options suivantes :
- Ajustement d'un codec utilisé par la session de service active (se),
- Ajustement d'une qualité de streaming utilisée par la session de service active (se),
- Ajustement d'une résolution utilisée par la session de service active (se),
- Ajustement des critères d'un service IP, notamment un codec, une résolution, une bande passante utilisée, une compression, un cryptage ou autre, en particulier pour un service multimédia.

5. Procédé selon l'une quelconque des revendications précédentes, **caractérisé en ce qu'** une valeur de connexion de l'information de connexion (ci) est comparée à une valeur d'exigence corrélée à l'exigence de service (sr), et l'étape d'ajustement de l'au moins un paramètre de session (sp) comprend une décision, dans laquelle :
- le paramètre de session (sp) pour la session de service active (se) est adapté de telle sorte que l'exigence de service (sr) est augmentée, si la valeur de connexion dépasse la valeur d'exigence,
- le paramètre de session (sp) pour la session de service active (se) est adapté de telle sorte que l'exigence de service (sr) est réduite, si la valeur de connexion est égale ou inférieure à la valeur d'exigence.

6. Procédé selon l'une quelconque des revendications précédentes, **caractérisé en ce que** les informations de connexion (ci) comprennent en outre une information sur tout autre paramètre ou mécanisme pertinent ou changement de réseau qui est pertinent pour le cas d'utilisation spécifique.

7. Procédé selon l'une quelconque des revendications précédentes, **caractérisé en ce que** l'étape de détermination de l'au moins une information de connexion (ci) est sélectionnée parmi au moins une des options suivantes :
- notifier un événement par une entité de réseau de politique et de règle de facturation (PCRF) via une interface de politique (Gx),
- communiquer l'événement en tant qu'information de connexion (ci) à une entité réseau de fonction d'application (AF) via une interface d'application (Rx).

8. Procédé selon l'une quelconque des revendications précédentes, **caractérisé en ce que** pendant l'étape de détermination de l'au moins une information de connexion (ci), une largeur de bande actuellement disponible de la connexion de communication (30) est signalée à l'entité réseau de fonctions d'application (AF).

9. Procédé selon l'une quelconque des revendications précédentes, **caractérisé en ce que** l'étape de détermination de l'au moins une information de connexion (ci) est sélectionnée parmi au moins une des options suivantes :
- notifier un événement par l'entité utilisateur (50),
- mesurer la capacité de transmission de la connexion de communication (30) par l'entité utilisateur (50) et/ou l'application (app),
- communiquer les informations de connexion (ci) par l'entité utilisateur (50) vers une entité réseau de fonction d'application (AF) via une couche de service et/ou d'application.

10. Procédé selon l'une quelconque des revendications précédentes, **caractérisé en ce que** l'entité utilisateur (50) accède à la connexion de communication (30) via un point d'accès Wi-Fi en utilisant le backhauling, et l'entité réseau (40) rapporte les informations de connexion (ci) vers le point d'accès Wi-Fi et/ou vers l'entité utilisateur (50).

11. Procédé selon l'une quelconque des revendications précédentes, **caractérisé en ce que** la session de service (se) fournit un service multimédia sur Wi-Fi.
